# FASCICULE DE BREVET EUROPEEN

(11) **EP 3 903 069 B1**
(45) Date de publication et mention de la délivrance du brevet: **07.06.2023**
(21) Numéro de dépôt: 19850731.1
(22) Date de dépôt: 24.12.2019
(51) Int. Cl.: G01C 21/34

(54) **PROCÉDÉ ET SYSTÈME DE PLANIFICATION D'UN TRAJET**
VERFAHREN UND SYSTEM ZUR REISEPLANUNG
METHOD AND SYSTEM FOR PLANNING A JOURNEY

(30) Priorité: 28.12.2018 FR 1874383
(43) Date de publication de la demande: 03.11.2021
(73) Titulaire: Vulog, 06200 Nice (FR)
(72) Inventeur: COLON, François, 13013 Marseille (FR)
(74) Mandataire: Roman, Alexis
(86) Numéro de dépôt international: PCT/FR2019/053293
(87) Numéro de publication internationale: WO 2020/136351

(56) Documents cités:
- WO-A1-2015/042650
- WO-A2-2018/056819
- KR-A- 20150 011 033
- US-A1- 2012 116 825
- US-A1- 2015 345 951
- US-B1- 8 949 028

## Description

### Domaine technique.

L'invention concerne un procédé et un système de planification d'un trajet.

Le domaine de l'invention concerne notamment les méthodes permettant d'optimiser un trajet entre un point de départ et un point d'arrivé, en utilisant des véhicules appropriés. L'invention s'applique préférentiellement, mais non nécessairement, à la planification de trajets en zone urbaine, de courte distance notamment inférieur à 50 Km, avantageusement inférieur à 10 Km.

### Etat de la technique.

Généralement, lorsqu'une personne souhaite effectuer un trajet entre un point de départ et un point d'arrivé, il utilise un seul et unique véhicule de transport : bus, métro, train, voiture, vélo, etc.

Le document brevet WO2017160276 décrit un système permettant de planifier un itinéraire multimodal. Cet itinéraire est segmenté, chaque segment pouvant être effectué avec un véhicule transport distinct. Un inconvénient de ce système est qu'il est complexe à réaliser. Le choix des véhicules utilisés est également limité, de sorte que l'élaboration d'un trajet n'est pas optimale notamment en termes de rapidité, de distance parcourue, de temps de trajet, de coût économique, d'empreinte carbone.

Le document brevet US8949028 (KLAMPFL) décrit un autre système permettant de planifier un itinéraire. En pratique, l'utilisateur n'est toutefois pas certain de pouvoir utiliser les véhicules sur l'itinéraire ainsi planifié.

Le document brevet US2015345951 décrit un autre système de partage de véhicules et divulgue des méthodes pour déterminer un ou plusieurs itinéraires dans un système de navigation. Une requête comprenant un premier ensemble de paramètres correspondant à un voyage est reçue. Le premier ensemble de paramètres comprend au moins un noeud d'origine pour le voyage, un noeud de destination pour le voyage, une heure de début pour le voyage, ou un ensemble de préférences associées au voyage. Les un ou plusieurs itinéraires entre le noeud d'origine et le noeud de destination sont déterminés sur la base du premier ensemble de paramètres. Chacun des un ou plusieurs itinéraires comprend au moins un sous-trajet de transport public parcouru par un véhicule public et un sous-trajet de transport privé parcouru par un véhicule privé. Le ou les itinéraires sont classés en fonction d'un score de voyage associé au ou aux itinéraires. Le score du trajet est déterminé sur la base de l'ensemble des préférences.

Un objectif de l'invention est de remédier aux inconvénients précités. Un autre objectif de l'invention est de proposer une méthode permettant de faciliter la réservation de véhicules sur un trajet.

### Présentation de l'invention.

La solution proposée par l'invention est un procédé de planification d'un trajet tel que décrit par la revendication 1.

Un service de partage de véhicule (en anglais « *car-sharing* ») ou véhicules en libre-service est un système dans lequel une société, une agence publique, une coopérative, une association, ou un groupe d'individus, met à la disposition de « clients » ou membres du service un ou plusieurs véhicules (ci-après « flotte de véhicules »). Plutôt que de disposer d'un véhicule personnel, l'utilisateur du service dispose d'un véhicule qu'il ne paye que pour la durée de son besoin. En d'autres termes, lorsqu'un utilisateur utilise un véhicule partagé, il est facturé d'un certain montant. Le montant facturé dépendant généralement du nombre de kilomètres parcourus et/ou du temps d'utilisation du véhicule et/ou du modèle ou type de véhicule. Le reste du temps, le véhicule est destiné à être utilisé par d'autres membres.

Un des avantages des véhicules partagés réside dans le fait qu'un utilisateur peu libérer son véhicule où il le souhaite. La position de ces véhicules n'est donc pas figée dans le temps, mais mouvantes (d'où le terme anglais de « freefloating »), de sorte qu'il est difficile de prédire à l'avance leur emplacement. L'invention tire profit de cette spécificité. Le serveur va pouvoir construire un trajet optimale en prenant en compte les véhicule partagés qui sont disponibles entre le point de départ et le point d'arrivé. Le statut attribué aux véhicules est de ce fait un paramètre prit spécifiquement en compte pour l'élaboration du trajet. La position de ces véhicules n'étant pas figée dans le temps, mais mouvante, il est difficile de prédire à l'avance leur emplacement. Le nombre de trajets susceptibles être élaborés par le serveur est donc décuplé par rapport à la solution décrite dans WO2017160276, de sorte que ledit serveur a la capacité d'optimiser au maximum le trajet, notamment en termes de durée et/ou de distance et par conséquent en termes de réduction de l'empreinte carbone. En d'autres termes, les positions géographiques des véhicules partagés d'une flotte étant variables dans le temps, le serveur peut utiliser cette caractéristique pour constamment créer de nouveaux trajets qui seront les plus appropriés à un instant donné. Il ne s'agit donc pas d'un système classique de calcul du meilleur itinéraire sur des lignes de transport fixes. Le serveur repère tous les véhicules disponibles à la réservation, et fige ceux permettant d'accomplir le trajet optimal, en les réservant. L'utilisateur n'a pas à gérer toute la complexité multimodale de ce type de trajet.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, le procédé comprend les étapes suivantes : - sélection, depuis l'équipement informatique de l'utilisateur, d'un ou plusieurs critères de préférence quant aux véhicules à utiliser sur le trajet et leur condition d'utilisation ; - transmission de ce ou ces critères au serveur informatique ; - élaboration du trajet, par le serveur informatique, en prenant en compte la ou les contraintes déterminées par le ou les critères de préférence.
- Selon un mode de réalisation, le procédé comprend l'étape suivante : récupération, par le serveur informatique, de données permettant de vérifier si le véhicule sélectionné répond à tout ou partie critères de préférence, lesquelles données sont récupérées par ledit serveur, auprès d'une ou plusieurs bases de données accessibles au travers d'un réseau informatique, et/ou par interrogation de capteurs installés sur les véhicules de la flotte.
- Selon l'invention, le procédé comprend les étapes suivantes : - équipement des véhicules de la flotte avec un dispositif de verrouillage/déverrouillage qui, lorsqu'ils sont activé par un équipement desdits véhicules, rendent lesdits véhicules physiquement inutilisables ; - en cas de réservation du véhicule sélectionné : transmission, par le serveur informatique, d'une commande d'activation du dispositif de verrouillage/déverrouillage dudit véhicule ; - transmission d'une commande de désactivation du dispositif de verrouillage/déverrouillage du véhicule sélectionné, lorsque l'utilisateur utilise ledit véhicule.
- Selon un mode de réalisation, le procédé comprend les étapes suivantes : - utilisation d'une première flotte de véhicules partagés et d'une deuxième flotte de véhicules partagés, le type des véhicules de la première flotte étant différent du type des véhicules de la deuxième flotte ; - attribution, par le serveur informatique, de statuts aux véhicules de la première flotte et aux véhicules de la deuxième flotte, lesquels statuts sont au moins « Disponible à la réservation » et « Indisponible à la réservation » ; - détermination, par le serveur informatique, des positions géographiques des véhicules de la première flotte et des véhicules de la deuxième flotte ; - sélection, par le serveur informatique, d'un premier véhicule de la première flotte et d'un deuxième véhicule de la deuxième flotte, lesquels véhicules sélectionnés sont localisés entre le point de départ et le point d'arrivé et ont un statut « Disponible à la réservation » ; - élaboration, par le serveur informatique, d'un trajet le plus rapide et/ou le plus court entre le point de départ et le point d'arrivé, ledit trajet étant élaboré de sorte que le premier segment de trajet utilise le premier véhicule sélectionné, et que le deuxième segment de trajet utilise le deuxième véhicule sélectionné ; - transmission de ce trajet, depuis le serveur informatique, à l'équipement informatique de l'utilisateur pour validation ;

- en cas de validation du trajet par l'utilisateur, réservation, depuis le serveur informatique, du premier véhicule sélectionné et du deuxième véhicule sélectionné.
- Selon un mode de réalisation: - le premier segment de trajet et le deuxième segment de trajet sont deux segments consécutifs ; - la jonction entre les deux segments de trajet est définie par un point d'entrée où l'utilisateur libère un premier véhicule utilisé sur le premier segment de trajet et par un point de sortie où l'utilisateur récupère un deuxième véhicule utilisé sur le deuxième segment de trajet ; - le serveur informatique élabore le trajet de sorte que la distance entre le point d'entrée et le point de sortie soit inférieure à une valeur prédéterminée.
- Selon un mode de réalisation, le procédé comprend l'étape suivante : utilisation d'un véhicule de transport en commun sur au moins un segment de trajet.
- Selon un mode de réalisation, le procédé comprend les étapes suivantes : - enregistrement, dans une base de données, des véhicules appartenant à au moins deux flottes de véhicules partagés, le type des véhicules de la première flotte étant différent du type des véhicules de la deuxième flotte, lesdits types étant choisis dans la famille suivante : voiture autonome, voiture, deux-roues motorisé, vélo, trottinette, planche a roulette, monocycle électrique, gyropode ; - sélection, dans la base de donnée, par le serveur informatique, d'un premier véhicule de la première flotte et d'un deuxième véhicule de la seconde flotte ; - élaboration, par le serveur informatique, d'un trajet le plus rapide et/ou le plus court entre le point de départ et le point d'arrivé, ledit trajet étant élaboré de sorte que le premier segment de trajet utilise le premier véhicule sélectionné, et que le deuxième segment de trajet utilise le deuxième véhicule sélectionné.
- Selon un mode de réalisation, le procédé comprend les étapes suivantes : - récupération, par le serveur informatique, de données relatives au trafic routier dans une zone géographique englobant le point de départ et le point d'arrivé,
- sélection du type de véhicule, par le serveur informatique, en fonction des données récupérées.
- Selon un mode de réalisation, le procédé comprend l'étape suivante après la réservation du véhicule sélectionné : transmission, à l'équipement informatique de l'utilisateur, depuis le serveur informatique, de l'emplacement dudit véhicule et d'un moyen d'identification dudit véhicule.

Un autre aspect de l'invention concerne un système de planification d'un trajet tel que décrit par la revendication 10.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] illustre un exemple de réalisation d'un système pour la mise en oeuvre de l'invention,
[Fig. 2] est un exemple de réalisation des étapes d'un procédé conforme à l'invention.

### Description des modes de réalisation.

Le procédé et le système objets de l'invention engendrent des manipulations d'éléments physiques, notamment des signaux (électriques ou magnétiques) et des données numériques, capables d'être stockés, transférés, combinés, comparés, ..., et permettant d'aboutir à un résultat souhaité.

L'invention met en oeuvre une ou plusieurs applications informatiques exécutées par des équipements ou serveurs informatiques. Par souci de clarté, il faut comprendre au sens de l'invention que *« un équipement ou serveur fait quelque chose* » signifie « *l'application informatique exécutée par une unité de traitement de l'équipement ou du serveur fait quelque chose* ». Tout comme *« l'application informatique fait quelque* chose » signifie « *l'application informatique exécutée par l'unité de traitement de l'équipement ou du serveur fait quelque* chose ».

Encore par souci de clarté, la présente invention est susceptible de faire référence à un ou plusieurs « *processus informatiques logiques* »*.* Ces derniers correspondent aux actions ou résultats obtenus par l'exécution d'instructions de différentes applications informatiques. Aussi, il faut également comprendre au sens de l'invention que « *un processus informatique logique est adapté pour faire quelque* chose » signifie « *les instructions d'une application informatique exécutées par une unité de traitement font quelque chose* »*.*

Encore par souci de clarté, les précisions suivantes sont apportées à certains termes utilisés dans la description et les revendications :
- « *Ressource informatique* » peut être compris de façon non limitative comme : composant, matériel, logiciel, fichier, connexion à un réseau informatique, quantité de mémoire RAM, espace de disque dur, bande passante, vitesse de processeur, nombre de CPU, etc.
- « *Serveur informatique* » peut être compris de façon non limitative comme : dispositif informatique (matériel ou logiciel) comportant des ressources informatiques pour réaliser les fonctions d'un serveur et qui offre des services, ordinateur, pluralité d'ordinateurs, serveur virtuel sur internet, serveur virtuel sur Cloud, serveur virtuel sur une plate-forme, serveur virtuel sur une infrastructure locale, réseaux de serveurs, cluster, noeud, ferme de serveurs, ferme de noeuds, etc.
- « *Service* » peut être compris de façon non limitative comme l'ensemble des fonctionnalités proposé et assuré par un serveur et par au moins un équipement connecté audit serveur par l'intermédiaire d'un réseau. Le service peut comprendre par exemple, les fonctionnalités suivantes : la planification d'un trajet, la réservation d'un véhicule partagé, la localisation d'un véhicule partagé, le verrouillage/déverrouillage à distance d'un véhicule partagé, etc.
- « *Requête* » désigne un ordre d'exécution pouvant suivre un protocole de communication et comprenant des paramètres en entrée (question, informations, ...) et éventuellement des paramètres en retour (réponse, information, ...), pouvant se présenter dans un format lié au protocole employé.
- « *Unité de traitement* » peut être compris de façon non limitative comme : processeur, microprocesseurs, CPU (pour Central Processing Unit).
- « *Matériel informatique* » représente une ou plusieurs pièces détachées d'un équipement informatique et peut être compris de façon non limitative comme hardware.
- « *Application informatique* » peut être comprise comme : logiciel, programme informatique, software, etc.
- « *Réseau informatique* » peut être compris de façon non limitative comme : bus informatique, réseau personnel (PAN), réseau local (LAN, WLAN, ..), réseau étendu (WAN), réseau internet, réseau intranet, réseau extranet. Le réseau informatique est un ensemble d'équipements informatiques reliés entre eux pour échanger, de manière sécurisée ou non, des informations et/ou des données selon un protocole de communication (ISDN, Ethernet, ATM, IP, CLNP, TCP, HTTP, ...).
- « *Base de données* » peut être comprise de façon non limitative comme un ensemble structuré et organisé de données enregistrées sur des supports accessibles par des équipements informatiques et pouvant être interrogées, lues et mises à jour. Des données peuvent y être insérées, récupérées, modifiées et/ou détruites. La gestion et l'accès à la base de données peuvent être assurés par un ensemble d'applications informatiques qui constituent un système de gestion de base de données (SGBD).
- « *Véhicule partagé* » ou véhicules en libre-service (en anglais « *car sharing* ») est un véhicule mis à la disposition de « clients » ou membres. Le véhicule peut être : une voiture autonome, une voiture (moteur thermique et/ou électrique), un deux-roues motorisé (moteur thermique et/ou électrique), un vélo (classique ou avec assistance électrique), une trottinette (classique ou avec assistance électrique), une planche a roulette, un monocycle électrique, un gyropode, un bateau, etc.
- « *Flotte* » ou « *parc* » peut être compris comme une pluralité de véhicules partagés appartenant à une société, une agence publique, une coopérative, une association, un groupe d'individus.
- Tel qu'utilisé ici, sauf indication contraire, l'utilisation des adjectifs ordinaux «*premier*»*,* «*deuxième*»*,* etc., pour décrire un objet indique simplement que différentes occurrences d'objets similaires sont mentionnées et n'implique pas que les objets ainsi décrits doivent être dans une séquence donnée, que ce soit dans le temps, dans l'espace, dans un classement ou de toute autre manière.

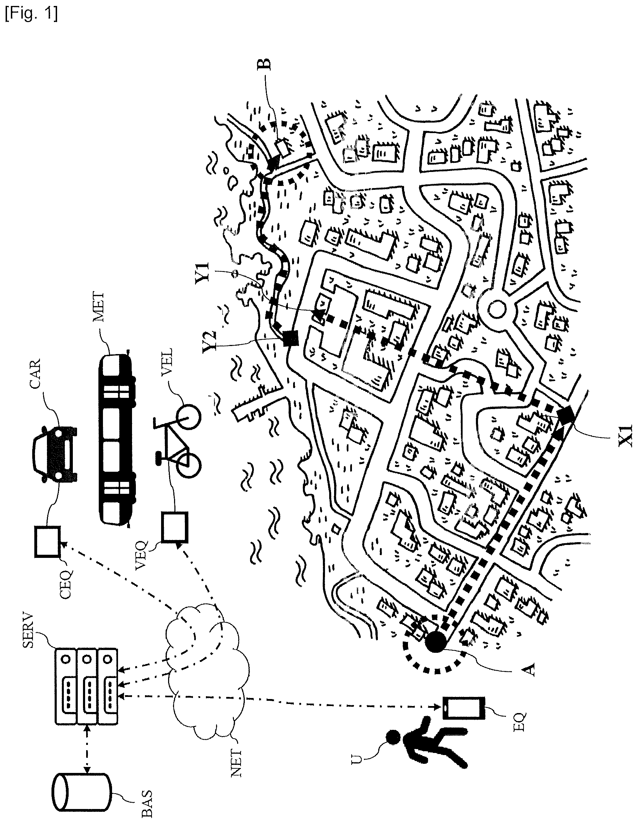

Sur la figure 1, le système pour la mise en oeuvre du procédé objet de l'invention comprend un serveur informatique SERV, des véhicules de transport : une voiture CAR, un métro MET et un vélo VEL, un utilisateur U. La zone géographique servant à exemplifier l'invention est ici une zone urbaine.

L'utilisateur U dispose d'au moins un équipement informatique EQ qui comporte une interface de communication, par exemple GSM, 3G, 4G ou Wifi, pour établir une liaison de communication sans fil avec le serveur SERV au travers d'un réseau NET. Ce dernier est par exemple un réseau internet, s'appuyant sur une infrastructure permettant d'acheminer des communications sans fil provenant de l'équipement EQ. Ce dernier est préférentiellement un téléphone intelligent (Smartphone), une tablette numérique, un ordinateur portable, etc. Il comprend les ressources informatiques, par exemple un code exécutable d'une application informatique téléchargeable, permettant de réaliser des fonctions du procédé de l'invention. Selon un mode de réalisation, l'utilisateur U est enregistré auprès d'un serveur de gestion de droits qui peut être ou non le serveur distant SERV. L'utilisateur U accède alors à un service correspondant à la planification de ces trajets. L'enregistrement d'un utilisateur peut être réalisé auprès d'un service web d'un serveur distant associé au service. L'enregistrement comporte par exemple l'enregistrement d'un identifiant utilisateur et d'une adresse réseau de l'équipement utilisateur EQ, il peut s'agir d'un port, d'une adresse IP, d'une adresse MAC ou toute autre adresse ou combinaisons d'éléments constituants des adresses permettant d'identifier un équipement utilisateur EQ. Selon un mode de réalisation, l'utilisateur U est préinscrit à partir d'un logiciel et est connus du fait qu'un identifiant est enregistré dans une base de données distante BAS. Selon un mode de réalisation, la base de données BAS associe un véhicule CAR, VEL à un utilisateur U lorsque ce dernier utilise ledit véhicule. Selon un mode de réalisation, le serveur SERV comporte une fonction permettant de réaliser les associations.

Le métro MET est un véhicule de transport en commun (ou transport collectif). L'invention doit être comprise comme pouvant faire intervenir d'autres types véhicules de transport en commun tels que : bus, autocar, tramway, train, funiculaire, bateau, etc. Ces véhicules sont généralement organisés par les pouvoirs publics et sont adaptés à l'accueil simultané de plusieurs personnes, généralement en contrepartie de l'achat d'un titre de transport (billet, ticket, carte d'abonnement, ...).

La voiture CAR est un véhicule d'une première flotte de véhicules partagés. Et le vélo VEL est un véhicule d'une deuxième flotte de véhicules partagés. Les véhicules CAR et VEL sont donc de type différents. L'invention doit être comprise comme pouvant faire intervenir des véhicules de n flottes de véhicules partagés, n étant un entier supérieur ou égal à 1. Pour offrir un nombre très important de possibilités de transport à l'utilisateur, chaque flotte a préférentiellement un type différent : voiture autonome, voiture, deux-roues motorisé, vélo, trottinette, planche a roulette, monocycle électrique, gyropode, etc.

Chaque véhicule de chaque flotte est associé à un numéro d'identification unique. Chaque véhicule dispose avantageusement d'au moins un équipement CEQ, VEQ comportant une interface de communication, par exemple GSM, 3G, 4G ou Wifi, pour établir une liaison de communication sans fil avec le serveur SERV au travers d'un réseau NET. Les équipements CEQ, VEQ sont préférentiellement des ordinateurs embarqués comprenant les ressources informatiques permettant de réaliser des fonctions du procédé de l'invention. Le serveur SERV attribut des statuts à chaque véhicule de chaque flotte :
- statut dit « Disponible à la réservation » : le véhicule est stationné (garé) et non réservé,
- statut dit « Indisponible à la réservation » : soit le véhicule est stationné mais déjà réservé par un utilisateur (statut « Indisponible-Réservé »), soit le véhicule est en cours de fonctionnement (statut « Indisponible-en fonctionnement »). D'autres types de statuts similaires peuvent être prévus.

Le serveur SERV met régulièrement à jour, préférentiellement en temps réel, la base de données des véhicules de chaque flotte. Cette base de données BAS regroupe notamment : l'identifiant de chaque véhicule, leur statut (« Disponible à la réservation » ou « Indisponible à la réservation », et leur position géographique. D'autres informations et/ou données peuvent être regroupées dans la base de données, le cas échéant. La base de données peut être enregistrée dans une zone mémoire du serveur SERV ou être distante dudit serveur et connectée à ce dernier.

L'information sur le statut d'un véhicule est transmise au serveur SERV en temps réel ou a des intervalles de temps prédéfinis (par exemple toutes les 5 minutes). Cette information peut être transmise au serveur SERV :
- par l'équipement embarqué CEQ, VEQ du véhicule suite à une détection d'un évènement. Cet événement est par exemple généré par une action de l'utilisateur sur une commande spécifique aménagé sur le véhicule CAR, VEL. Cette commande peut être actionnée lorsque l'utilisateur a libéré le véhicule après un trajet. Le statut passe alors de « Indisponible à la réservation » à « Disponible à la réservation »,
- par l'équipement EQ de l'utilisateur U du véhicule CAR, VEL, consécutivement à une action dudit l'utilisateur sur son équipement. L'utilisateur peut par exemple actionner une touche dédiée affichée sur un écran tactile de son équipement, après avoir stationné et libéré son véhicule. Le statut passe alors de « Indisponible à la réservation » à « Disponible à la réservation ».

Lorsque le serveur SERV reçoit une requête de réservation de la part d'un utilisateur abonné à un service de partage de véhicules, et qu'il peut faire droit à cette requête (c'est-à-dire qu'un véhicule est disponible à la réservation), ledit serveur fait passer le statut d'un véhicule de « Disponible à la réservation » à « Indisponible à la réservation ». Cette requête de réservation peut par exemple être générée via un équipement électronique ou via une application informatique auquel l'utilisateur est abonné.

La position géographique de chaque véhicule de chaque flotte peut être obtenue par satellite (système GPS ou Galileo) ou par un système de triangulation (par exemple, un système utilisant les cellules d'un réseau 4G) ou par une combinaison des deux systèmes de localisation. L'équipement CEQ, VEQ d'un véhicule CAR, VEL comporte avantageusement un composant, par exemple un composant GPS, permettant d'obtenir une information de géo-localisation qui peut être récupérée par le serveur SERV. Le serveur SERV peut récupérer automatiquement cette information en interrogeant en temps réel ou a intervalles de temps régulier (par exemple toutes les 5 minutes), les équipements CEQ, VEQ des véhicules CAR, VEL. Les équipements CEQ, VEQ des véhicules CAR, VEL peuvent également transmettre automatiquement cette information au serveur SERV (sans répondre à une requête d'interrogation), en temps réel ou a intervalles de temps régulier (par exemple toutes les 5 minutes). Selon une alternative, la position géographique d'un véhicule CAR, VEL peut correspondre à une position définie à partir d'une interface de saisie d'un équipement EQ d'un utilisateur U utilisant le véhicule CAR, VEL. Par exemple, l'utilisateur U peut évaluer une position à partir d'une carte interactive affichée sur une interface graphique de son équipement EQ. Cette position est ensuite transmise au serveur SERV.

Dans l'exemple de la figure 1, l'utilisateur U souhaite effectuer un trajet, en zone urbaine, par exemple entre son lieu d'habitation (point de départ A) et le bureau où il travaille (point d'arrivé B). Pour ce faire, il transmet au serveur SERV une requête de planification de trajet, qui est par exemple générée depuis son équipement EQ, via une application informatique auquel ledit utilisateur est abonné. Cette requête de planification inclue le point de départ A et le point d'arrivé B. La position du point de départ A peut être renseignée manuellement depuis une interface de l'équipement EQ, par exemple en inscrivant une adresse ou en sélectionnant un point sur une carte interactive affichée sur ladite interface graphique. Selon une alternative, la position du point de départ A est par défaut la position géographique de l'utilisateur U au moment où il transmet sa requête de planification. Cette position peut être obtenue par satellite (système GPS ou Galileo) ou par un système de triangulation (par exemple, un système utilisant les cellules d'un réseau 4G) ou par une combinaison des deux systèmes de localisation. Aussi, l'équipement EQ comporte avantageusement un composant, par exemple un composant GPS, permettant d'obtenir une information de géo-localisation qui est automatiquement incluse dans la requête de planification. La position du point d'arrivée B peut également être renseignée manuellement depuis une interface de l'équipement EQ, par exemple en inscrivant une adresse ou en sélectionnant un point sur une carte interactive affichée sur ladite interface graphique. La position du point d'arrivée B est ensuite incluse dans la requête de planification et transmise au serveur SERV.

Le serveur SERV intègre avantageusement une ou plusieurs applications informatiques de cartographie numérique et de calcul d'itinéraires, de sorte qu'il a une connaissance exhaustive des rues, voies de circulation, cheminements piéton, situés entre le point A et le point B. De même, le serveur SERV intègre avantageusement une ou plusieurs applications informatiques de plans de transports en commun et de calcul d'itinéraires de transports en commun, de sorte qu'entre le point A et le point B, et pour chaque type de transport, il connait les stations (ou gare), les horaires de passage, la distance et/ou le temps de parcours entre une station de départ et une station d'arrivée, etc. De manière alternative, le serveur SERV est adapté pour se connecter à un ou plusieurs sites de cartographie numérique (dont plans des transports en commun) et de calcul d'itinéraires (dont itinéraires des transports en commun) sur internet pour récupérer ces informations.

Dans le cadre de la présente invention, le serveur SERV analyse la requête de planification de l'utilisateur U et récupère les positions des points de départ A et d'arrivé B. Le serveur SERV interroge alors la base de données BAS pour déterminer les véhicules des différentes flottes dont la position géographique, à cet instant, est située entre les points A et B. Par exemple, le serveur SERV défini une zone géographique incluse dans un cercle (respectivement un rectangle ou un carré) dont le diamètre (respectivement la diagonale) correspond à la distance entre les points A et B. Tous les véhicules dont la position géographique est située dans cette zone sont analysés. Le serveur SERV affine les résultats de cette recherche pour ne sélectionner dans la base de données BAS, que les véhicules qui ont un statut « Disponible à la réservation ». Dans l'exemple de la figure 1, le serveur SERV constate que la voiture CAR d'une flotte de voitures partagées et qu'un vélo VEL d'une flotte de vélos partagés sont disponibles entre le point A et le point B.

Le serveur SERV élabore alors le trajet le plus rapide et/ou le plus court entre le point de départ A et le point d'arrivé B, en tenant compte de la disponibilité, des positions et des types des véhicules CAR et VEL sélectionnés. Ce trajet est multimodal, c'est-à-dire qu'il comporte plusieurs segments de trajets reliés par des noeuds. Le trajet est élaboré de sorte que la voiture CAE soit utilisée sur un segment de trajet et le vélo VEL sur un autre segment de trajet. Dans l'exemple de la figure 1, le serveur calcule que le trajet le plus rapide et ayant l'empreinte carbone la plus basse, consiste à utiliser la voiture CAR sur un premier segment de trajet (segment initial A-X1), à utiliser le métro sur un deuxième segment de trajet (segment intermédiaire X1-Y1) et à utiliser le vélo sur un troisième segment de trajet (segment final Y2-B). Le serveur SERV transmet ensuite cette proposition de trajet optimal à l'équipement EQ de l'utilisateur U pour validation. Cette proposition de trajet peut être accompagnée de la durée et/ou distance du trajet, de son prix, de l'émission de CO₂ générée. Le serveur peut en outre proposer des trajets alternatifs en complément de ce trajet optimal. Par exemple, le serveur SERV peut proposer un trajet plus court mais avec une empreinte carbone plus élevée, consistant à utiliser la voiture CAR du point A au point Y2 et à utiliser le vélo VEL sur le segment final Y2-B calcule que le trajet le plus rapide. Le serveur SERV peut encore proposer un trajet plus long mais avec une empreinte carbone plus basse, consistant à marcher du point A au point X1, à utiliser le métro sur le segment intermédiaire X1-Y1 et à utiliser le vélo sur le segment final Y2-B. La transmission du trajet optimal et éventuellement des trajets alternatifs, s'accompagne d'une requête de validation. Celle-ci se présente par exemple sous la forme d'une touche de validation sélectionnable qui s'affiche sur l'interface de l'équipement EQ.

L'hypothèse retenue ici est que l'utilisateur U valide le trajet optimal. Cette validation peut se présenter sous la forme d'une commande de validation transmise au serveur SERV depuis l'équipement EQ. Le serveur SERV va alors réserver la voiture CAR et le vélo VEL. Dans la base de données BAS, leur statut va passer de « Disponible à la réservation » à « Indisponible à la réservation » de sorte qu'aucun autre utilisateur ne pourra les utiliser. L'utilisateur U est ainsi assurer de pouvoir utiliser ces véhicules sur son trajet. La mention « Indisponible à la réservation » peut en outre s'afficher sur une interface graphique installée de manière visible sur chaque véhicule CAR, VEL.

En complément ou en substitution de la modification du statut des véhicules CAR et VEL, le serveur SERV peut rendre physiquement inutilisable lesdits véhicules par des personnes autre que l'utilisateur U. En effet, les véhicules CAR et VEL peuvent être équipés d'un dispositif de verrouillage/déverrouillage à distance. Pour la voiture CAR, il peut s'agir d'un dispositif anti-démarrage du moteur piloté par l'équipement CEQ. Pour le vélo VEL, il peut s'agir d'un dispositif de blocage des roues piloté par l'équipement VEQ. Ainsi, après la validation du trajet par l'utilisateur U, le serveur SERV transmet aux équipements CEQ et VEQ, au travers du réseau NET, une commande d'activation du dispositif de verrouillage, rendant les véhicules CAR et VEL momentanément inutilisables. Lorsque l'utilisateur U accède à un des véhicules CAR, VEL, il peut transmet aux équipements CEQ, VEQ, depuis son équipement EQ, par exemple via une liaison sans fil du type wifi ou Bluetooth ou suite à la lecture d'un code-barres ou d'une puce NFC, une commande de désactivation du dispositif de verrouillage, rendant ledit véhicule utilisable. De manière alternative, le serveur SERV peut détecter, notamment par géo-localisation, que la position de l'utilisateur (i.e. de son équipement EQ), coïncide avec celle du véhicule concerné CAR ou VEL. Dès lors, c'est le serveur SERV qui transmet à l'équipement respectif CEQ ou VEQ, au travers du réseau NET, la commande de désactivation.

Lorsque l'utilisateur U valide le trajet, le serveur SERV transmet à l'équipement EQ, une confirmation de validation, à laquelle est associée une carte interactive montant en détail le parcours du trajet retenu et qui s'affiche sur une interface graphique dudit équipement. Préférentiellement, le serveur SERV indique très précisément l'emplacement des véhicules CAR, VEL réservés (par exemple en indiquant la position géographique sur la carte interactive) ainsi qu'un moyen d'identification desdits véhicules. Ce moyen d'identification peut se présenter sous la forme d'une photo des véhicules, du numéro de la plaque d'immatriculation de la voiture CAR, d'un numéro d'identification inscrit sur le vélo CEL, etc.

Selon un mode de réalisation, l'utilisateur U peut renseigner un ou plusieurs critères de préférence quant aux véhicules à utiliser sur le trajet et leur condition d'utilisation. Lors de son inscription au service de planification ou durant la préparation de sa requête de planification, l'utilisateur U peut par exemple spécifié, depuis l'interface graphique de son équipement EQ, un certain nombre de critères. Ces critères sont personnalisés. Il peut par exemple indiquer qu'il ne veut jamais utiliser un gyropode (ex : SEGWAY^{®}) ni une planche a roulette, ni une moto, qu'il accepte d'utiliser le métro sauf aux heures de pointes entre 17h et 19h, qu'il apprécie les voitures et surtout les voitures autonomes, et qu'il accepte d'utiliser le vélo sur des distance inférieure ou égale à 1 Km, sauf en cas de pluie ou si la température extérieure dépasse 30°C. Ces contraintes sont transmises au serveur SERV, lors l'inscription de l'utilisateur U au service de planification et/ou en même temps que la transmission de sa requête de planification. Avantageusement, le serveur SERV associe ces critères à l'identifiant de l'utilisateur et les enregistre dans la base de données BAS, notamment pour prendre en compte les contraintes qui en découlent lors des prochaines planifications. Le serveur SERV peut alors élaborer le trajet en prenant en compte la ou les contraintes déterminées par ce ou ces critères de préférence.

En reprenant l'exemple de la figure 1, si le serveur SERV constate qu'une moto, qu'une voiture classique et qu'une voiture autonome sont toutes trois disponibles au point de départ A, il ne sélectionnera pas la moto, et privilégiera la voiture partagée au détriment de la voiture classique. De même, si la distance entre la sortie du métro Y1 et le point B est supérieure à 1 Km, le serveur SERV ne sélectionnera pas le vélo VEL pour parcourir le segment final Y2-B. Il en est de même s'il pleut ou si la température extérieure dépasse 30°C. Le serveur SERV sélectionnera alors un autre véhicule partagé, avec pour conséquence d'élaborer un autre trajet que celui illustré sur la figure 1.

Il est donc avantageux que le serveur SERV puisse récupérer des données permettant de vérifier si les véhicules sélectionnés CAR, VEL répondent à tout ou partie critères de préférence, notamment leurs conditions météorologiques d'utilisation. Ces données peut être récupérées de plusieurs façons :
- le serveur SERV peut être adapté pour se connecter à une ou plusieurs bases de données de sites météorologiques sites de cartographie numérique sur internet pour récupérer ces informations, et/ou
- le serveur SERV interroge des capteurs installés sur les véhicules partagés (capteur de température, capteur d'humidité, ...).

Le serveur SERV peut également récupérer, auprès de sites internet dédiés, des données relatives au trafic routier dans la zone géographique englobant le point de départ A et le point d'arrivé B. Ces données de trafic sont par exemple : trafic dense dans telle zone, ou trafic fluide dans tel autre zone, circulation fermée dans telle rue, travaux dans telle autre rue, etc. Le serveur SERV va alors prendre en compte ces données pour sélectionner un type de véhicule et élaborer son trajet. Par exemple, si le serveur SERV détecte que le segment Y2-B parcours une rue dans laquelle le trafic et dense ou dans laquelle des travaux sont réalisés, il va privilégier l'utilisation d'un véhicule de petit gabarit du type vélo, trottinette, planche a roulette, monocycle électrique ou gyropode. Les critères de préférence mentionnés précédemment, permettent au serveur SERV d'affiner sa sélection et de choisir le véhicule le plus approprié à l'utilisateur U, le vélo VEL dans l'exemple de la figure 1.

Les données relatives au trafic routier sont également utilisées par le serveur SERV pour définir sa stratégie d'optimisation du trajet. En se basant sur la figure 1, l'utilisateur U habite par exemple dans la banlieue (point A) d'une ville et veut ce rendre sur son lieu de travail (Point B) situé en plein centre de cette ville. Le serveur constate qu'à l'instant où l'utilisateur transmet sa requête de planification, l'accès au centre-ville en voiture est difficile car le trafic est très dense. Le serveur SERV va alors élaborer son trajet pour proposer à l'utilisateur U une voiture autonome CAR qui va venir le chercher dans 15 mn devant chez lui (Point A). La voiture autonome CAR va déposer l'utilisateur U devant une bouche de métro (Point X1). Ce métro arrivera 10 mn plus tard à une station déterminée par le serveur (Point Y1). A la sortie de cette station, un vélo VEL, situé à 50 m de ladite station (point Y2) sera réservé et permettra à l'utilisateur U d'atteindre son lieu de travail (Point B).

La jonction (ou noeud) entre deux segments de trajets consécutifs, par exemple la jonction entre le segment intermédiaire X1-Y1 et le segment final Y2-B, est définie par un point d'entrée Y1 (ex : la sortie de la station où l'utilisateur quitte le métro MET) et un point de sortie (ex : l'emplacement où l'utilisateur récupère le vélo VEL). De manière avantageuse, le serveur SERV élabore le trajet de sorte que la distance entre le point d'entrée Y1 et le point de sortie Y2 soit inférieure à une valeur prédéterminée, par exemple inférieur à 100 m. Si le vélo VEL était disponible mais situé à 200 m de la sortie du métro Y1, le serveur SERV n'aurait pas sélectionné ledit vélo, mais opté pour un autre véhicule disponible et de fait, aurait défini un autre trajet. Il aurait par exemple proposé à l'utilisateur U de sortir à la station de métro suivante pour récupérer une trottinette située à 20 m de la sortie de cette station.

L'invention concerne également un produit programme d'ordinateur comportant des instructions pour la mise en oeuvre des différentes étapes du procédé de l'invention. Les étapes peuvent être réalisées par un programme d'ordinateur enregistré dans la mémoire du serveur SERV et dont les instructions sont exécutées par l'unité de traitement dudit serveur. Selon différents modes de réalisation, des étapes du procédé peuvent être réalisées par l'équipement EQ de l'utilisateur et/ou par un équipement CEQ, VEQ d'un véhicule partagé CAR, VEL.

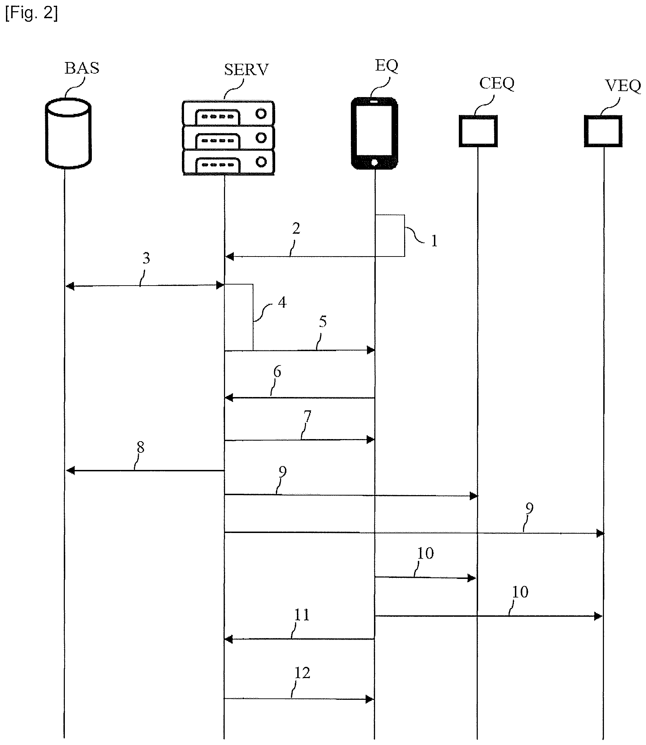

La figure 2 représente un synoptique des principales étapes d'un procédé selon l'invention. La figure 2 schématise cinq entités déjà représentées à la figure 1, à savoir la base de données BAS, le serveur SERV, l'équipement EQ de l'utilisateur U et les équipements CEQ, VEQ des véhicules partagés CAR, VEL. Selon un mode préféré de réalisation :
- **Evènement 1** : génération d'une requête de planification par l'utilisateur, depuis son équipement EQ. L'utilisateur renseigne le point de départ A, le point d'arrivé B, et éventuellement un ou plusieurs critère de préférence.
- **Etape 2 :** transmission de cette requête au serveur SERV, depuis l'équipement EQ.
- **Etape 3** : le serveur SERV interroge la base de données BAS pour sélectionner des véhicules partagés (CAR, VEL) localisés entre le point de départ et le point d'arrivé et dont le statut est « Disponible à la réservation ». A cette étape, le serveur SERV peut également interroger d'autres sites internet et/ou bases de données et/ou les équipements CEQ, VEQ, pour récupérer des données de cartographie numérique, des données de plans de transports en commun, des données permettant de vérifier si les véhicules sélectionnés CAR, VEL répondent à tout ou partie critères de préférence, des données relatives au trafic routier, etc.
- **Evénement 4 :** le serveur SERV met en oeuvre le processus informatique permettant de calculer le trajet le plus rapide et/ou le plus court. Le trajet est élaboré de sorte que les véhicules sélectionnés CAR, VEL soient utilisés sur différents segments de trajet. Ce calcul peut être réalisé en même temps que l'étape 3.
- **Etape 5** : le serveur SERV transmet à l'équipement EQ de l'utilisateur, une suggestion de trajet optimal, éventuellement accompagné d'autres trajets alternatifs.
- **Etape 6 :** l'utilisateur valide le trajet. L'équipement EQ transmet au serveur SERV la commande de validation du trajet.
- **Etape 7** : le serveur SERV transmet à l'équipement EQ une conformation de validation à laquelle est associée une carte interactive montant en détail le parcours du trajet, l'emplacement des véhicules CAR, VEL réservés, et éventuellement un moyen d'identification desdits véhicules.
- **Etape 8 :** le serveur SERV réserve les véhicules CAR, VEL en modifiant la base de données BAS pour faire passer leur statut de « Disponible à la réservation » à « Indisponible à la réservation ».
- **Etape 9 :** le serveur SERV transmet aux équipements CEQ, VEQ, une commande d'activation du dispositif de verrouillage, rendant les véhicules CAR, VEL momentanément inutilisables.
- **Etape 10 :** l'utilisateur U accède aux véhicules CAR, VEL. Une commande de désactivation du dispositif de verrouillage est transmise aux équipements CEQ, VEQ, depuis l'équipement EQ.
- **Etape 11** : l'utilisateur U a finalisé son trajet. L'équipement EQ transmet au serveur SERV un indicateur de fin de trajet, par exemple généré suite à l'activation d'une touche dédiée affichée sur une interface graphique dudit équipement.
- **Etape 12** : le serveur SERV détermine le montant à facturer à l'utilisateur et transmet, à l'équipement EQ, la facture correspondante.

Les étapes 11 et 12 sont optionnelles. L'étape 12 de facturation peut être mise en oeuvre entre l'étape 6 et l'étape 7 ou 8, c'est-à-dire après la validation du trajet par l'utilisateur et avant la confirmation et/ou la réservation des véhicules CAR, VEL. Le paiement de cette facture peut d'ailleurs être l'élément déclencheur de l'étape 7 ou de l'étape 8.

## Revendications

1. Procédé de planification d'un trajet comprenant les étapes suivantes :
- détermination, depuis un équipement informatique (EQ) d'un utilisateur (U), d'un point de départ (A) du trajet et d'un point d'arrivé (B) dudit trajet,
- sélection d'au moins deux véhicules de transport (CAR, VEL, MET) entre le point de départ (A) et le point d'arrivé (B) de sorte que le trajet comporte au moins un premier segment de trajet (A-X1) utilisant un véhicule (CAR) et un deuxième segment de trajet (Y2-B) utilisant un autre véhicule (VEL), le procédé comportant les étapes suivantes :
- utilisation d'une flotte de véhicules partagés, lesdits véhicules étant équipés avec un dispositif de verrouillage/déverrouillage qui, lorsqu'ils sont activés par un équipement (CEQ, VEQ) desdits véhicules, rendent lesdits véhicules physiquement inutilisables,
- attribution, par un serveur informatique (SERV), de statuts aux véhicules de la flotte, lesquels statuts sont au moins : « Disponible à la réservation » et « Indisponible à la réservation »,
- détermination, par le serveur informatique (SERV), des positions géographiques des véhicules de la flotte,
- dès que le point de départ (A) et le point d'arrivé (B) du trajet sont connus du serveur informatique (SERV) alors : sélection, par ledit serveur, d'au moins un véhicule (CAR, VEL) de la flotte qui est localisé entre le point de départ (A) et le point d'arrivé (B) et qui a un statut « Disponible à la réservation »,
- élaboration, par le serveur informatique (SERV), d'un trajet le plus rapide et/ou le plus court entre le point de départ (A) et le point d'arrivé (B), ledit trajet étant élaboré de sorte qu'au moins un des segments de trajet (A-X1 ; Y2-B) utilise le véhicule sélectionné (CAR, VEL),
- transmission de ce trajet, depuis le serveur informatique (SERV), à l'équipement informatique (EQ) de l'utilisateur (U) pour validation,
- en cas de validation du trajet par l'utilisateur (U) :
-- réservation, depuis le serveur informatique (SERV), du véhicule sélectionné (CAR, VEL), le statut dudit véhicule passant de « Disponible à la réservation » à « Indisponible à la réservation »,
-- transmission, par le serveur informatique (SERV), d'une commande d'activation du dispositif de verrouillage/déverrouillage du véhicule sélectionné réservé (CAR, VEL),
et dans lequel une commande de désactivation du dispositif de verrouillage/déverrouillage du véhicule sélectionné réservé (CAR, VEL) est transmise par le serveur informatique (SERV) à l'équipement (CEQ, VEQ) dudit véhicule, lorsque ledit serveur détecte, par géo-localisation, que la position de l'équipement (EQ) de l'utilisateur coïncide avec celle dudit véhicule.

2. Procédé selon la revendication 1, comprenant les étapes suivantes :
- sélection, depuis l'équipement informatique (EQ) de l'utilisateur (U), d'un ou plusieurs critères de préférence quant aux véhicules à utiliser sur le trajet et leur condition d'utilisation,
- transmission de ce ou ces critères au serveur informatique (SERV),
- élaboration du trajet, par le serveur informatique (SERV), en prenant en compte la ou les contraintes déterminées par le ou les critères de préférence.

3. Procédé selon la revendication 2, comprenant l'étape suivante : récupération, par le serveur informatique (SERV), de données permettant de vérifier si le véhicule sélectionné (CAR, VEL) répond à tout ou partie critères de préférence, lesquelles données sont récupérées par ledit serveur,
- auprès d'une ou plusieurs bases de données accessibles au travers d'un réseau informatique, et/ou
- par interrogation de capteurs installés sur les véhicules de la flotte.

4. Procédé selon l'une des revendications précédentes, comportant les étapes suivantes :
- utilisation d'une première flotte de véhicules partagés et d'une deuxième flotte de véhicules partagés, le type des véhicules de la première flotte étant différent du type des véhicules de la deuxième flotte,
- attribution, par le serveur informatique (SERV), de statuts aux véhicules de la première flotte et aux véhicules de la deuxième flotte, lesquels statuts sont au moins « Disponible à la réservation » et « Indisponible à la réservation »,
- détermination, par le serveur informatique (SERV), des positions géographiques des véhicules de la première flotte et des véhicules de la deuxième flotte,
- sélection, par le serveur informatique (SERV), d'un premier véhicule (CAR) de la première flotte et d'un deuxième véhicule (VEL) de la deuxième flotte, lesquels véhicules sélectionnés sont localisés entre le point de départ (A) et le point d'arrivé (B) et ont un statut « Disponible à la réservation »,
- élaboration, par le serveur informatique (SERV), d'un trajet le plus rapide et/ou le plus court entre le point de départ (A) et le point d'arrivé (B), ledit trajet étant élaboré de sorte que le premier segment de trajet (A-X1) utilise le premier véhicule sélectionné (CAR), et que le deuxième segment de trajet (Y2-B) utilise le deuxième véhicule sélectionné (VEL),
- transmission de ce trajet, depuis le serveur informatique (SERV), à l'équipement informatique (EQ) de l'utilisateur (U) pour validation,
- en cas de validation du trajet par l'utilisateur (U), réservation, depuis le serveur informatique (SERV), du premier véhicule sélectionné (CAR) et du deuxième véhicule sélectionné (VEL).

5. Procédé selon l'une des revendications précédentes, dans lequel :
- le premier segment de trajet (X1-Y1) et le deuxième segment de trajet (Y2-B) sont deux segments consécutifs,
- la jonction entre les deux segments de trajet est définie par un point d'entrée (Y1) où l'utilisateur (U) libère un premier véhicule (MET) utilisé sur le premier segment de trajet (X1-Y1) et par un point de sortie (Y2) où l'utilisateur (U) récupère un deuxième véhicule (VEL) utilisé sur le deuxième segment de trajet (Y2-B),
- le serveur informatique (SERV) élabore le trajet de sorte que la distance entre le point d'entrée (Y1) et le point de sortie (Y2) soit inférieure à une valeur prédéterminée.

6. Procédé selon l'une des revendications précédentes, comportant l'étape suivante : utilisation d'un véhicule de transport en commun (MET) sur au moins un segment de trajet (X1-Y1).

7. Procédé selon l'une des revendications précédentes, comportant les étapes suivantes :
- enregistrement, dans une base de données (BAS), des véhicules appartenant à au moins deux flottes de véhicules partagés, le type des véhicules de la première flotte étant différent du type des véhicules de la deuxième flotte, lesdits types étant choisis dans la famille suivante : voiture autonome, voiture, deux-roues motorisé, vélo, trottinette, planche a roulette, monocycle électrique, gyropode,
- sélection, dans la base de donnée (BAS), par le serveur informatique (SERV), d'un premier véhicule (CAR) de la première flotte et d'un deuxième véhicule (VEL) de la seconde flotte,
- élaboration, par le serveur informatique (SERV), d'un trajet le plus rapide et/ou le plus court entre le point de départ (A) et le point d'arrivé (B), ledit trajet étant élaboré de sorte que le premier segment de trajet (A-X1) utilise le premier véhicule sélectionné (CAR), et que le deuxième segment de trajet (Y2-B) utilise le deuxième véhicule sélectionné (VEL).

8. Procédé selon la revendication 7, comprenant les étapes suivantes :
- récupération, par le serveur informatique (SERV), de données relatives au trafic routier dans une zone géographique englobant le point de départ (A) et le point d'arrivé (B),
- sélection du type de véhicule, par le serveur informatique (SERV), en fonction des données récupérées.

9. Procédé selon l'une des revendications précédentes, comportant l'étape suivante après la réservation du véhicule (CAR, VEL) sélectionné :
- transmission, à l'équipement informatique (EQ) de l'utilisateur (U), depuis le serveur informatique (SERV), de l'emplacement dudit véhicule et d'un moyen d'identification dudit véhicule.

10. Système de planification d'un trajet comportant :
- un équipement informatique (EQ) d'un utilisateur (U) adapté pour déterminer un point de départ (A) du trajet et un point d'arrivé (B) dudit trajet,
- un serveur informatique (SERV) adapté pour sélectionner au moins deux véhicules de transport (CAR, VEL, MET) entre le point de départ (A) et le point d'arrivé (B) de sorte que le trajet comporte au moins un premier segment de trajet (A-X1) utilisant un véhicule (CAR) et un deuxième segment de trajet (Y2-B) utilisant un autre véhicule (VEL),
- un véhicule (CAR, VEL) d'une flotte de véhicules partagés étant utilisé sur au moins un segment de trajet (A-X1 ; Y2-B), les véhicules de ladite flotte étant équipés avec un dispositif de verrouillage/déverrouillage qui, lorsqu'ils sont activés par un équipement (CEQ, VEQ) desdits véhicules, rendent lesdits véhicules physiquement inutilisables,
- le serveur informatique (SERV) comportant une unité de traitement et une mémoire comprenant une ou plusieurs applications informatiques dont les instructions, lorsqu'elles sont exécutées par ladite unité de traitement, permettent audit serveur :
-- d'attribuer des statuts aux véhicules de la flotte, lesquels statuts sont au moins : « Disponible à la réservation » et « Indisponible à la réservation »,
-- de déterminer des positions géographiques des véhicules de la flotte,
-- en réponse à la connaissance du point de départ (A) et du point d'arrivé (B) du trajet : de sélectionner au moins un véhicule (CAR, VEL) de la flotte qui est localisé entre le point de départ (A) et le point d'arrivé (B) et qui a un statut « Disponible à la réservation »,
-- d'élaborer un trajet le plus rapide et/ou le plus court entre le point de départ (A) et le point d'arrivé (B), ledit trajet étant élaboré de sorte qu'au moins un des segments de trajet (A-X1 ; Y2-B) utilise le véhicule sélectionné (CAR, VEL),
-- de transmettre ce trajet à l'équipement informatique (Q) de l'utilisateur (U) pour validation,
-- en cas de validation du trajet par l'utilisateur (U) :
- de réserver le véhicule sélectionné (CAR, VEL), le statut dudit véhicule passant de « Disponible à la réservation » à « Indisponible à la réservation »,
--- de transmettre une commande d'activation du dispositif de verrouillage/déverrouillage du véhicule sélectionné réservé (CAR, VEL),
et dans lequel une commande de désactivation du dispositif de verrouillage/déverrouillage du véhicule sélectionné réservé (CAR, VEL) est transmise par le serveur informatique (SERV) à l'équipement (CEQ, VEQ) dudit véhicule, lorsque ledit serveur détecte, par géo-localisation, que la position de l'équipement (EQ) de l'utilisateur coïncide avec celle dudit véhicule.

## Patentansprüche

1. Verfahren zur Reiseplanung, das die folgenden Schritte einschließt:
- Bestimmung eines Startpunkts (A) der Reise und eines Zielpunkts (B) der Reise von einer IT-Ausstattung (EQ) eines Verwenders (U) aus,
- Auswahl von mindestens zwei Transportfahrzeugen (CAR, VEL, MET) zwischen dem Startpunkt (A) und dem Zielpunkt (B), so dass die Reise mindestens einen ersten Reiseabschnitt (A-X1) unter Verwendung eines Fahrzeugs (CAR) und einen zweiten Reiseabschnitt (Y2-B) unter Verwendung eines anderen Fahrzeugs (VEL) umfasst, wobei das Verfahren die folgenden Schritte umfasst:
- Verwendung einer Flotte von gemeinsam genutzten Fahrzeugen, wobei die Fahrzeuge mit einer Ver-/Entriegelungsvorrichtung ausgestattet sind, die, wenn sie durch eine Ausstattung (CEQ, VEQ) der Fahrzeuge aktiviert werden, die Fahrzeuge physisch unverwendbar machen,
- Zuweisung, durch einen IT-Server (SERV), von Status zu den Fahrzeugen der Flotte, wobei die Status mindestens sind: "Zur Reservierung verfügbar" und "Zur Reservierung nicht verfügbar",
- Bestimmung der geografischen Positionen der Fahrzeuge der Flotte durch den IT-Server (SERV),
- sobald der Startpunkt (A) und der Zielpunkt (B) der Reise dem IT-Server (SERV) bekannt sind, dann: Auswahl, durch den Server, von mindestens einem Fahrzeug (CAR, VEL) der Flotte, das zwischen dem Startpunkt (A) und dem Zielpunkt (B) lokalisiert ist und das einen Status "Zur Reservierung verfügbar" hat,
- Ausarbeitung, durch den IT-Server (SERV), einer schnellsten und/oder kürzesten Reise zwischen dem Startpunkt (A) und dem Zielpunkt (B), wobei die Reise so ausgearbeitet wird, dass mindestens einer der Reiseabschnitte (A-X1; Y2-B) das ausgewählte Fahrzeug (CAR, VEL) verwendet,
- Übertragung dieser Reise vom IT-Server (SERV) aus an die IT-Ausstattung (EQ) des Verwenders (U) zur Bestätigung,
- bei Bestätigung der Reise durch den Verwender (U):
-- Reservierung des ausgewählten Fahrzeugs (CAR, VEL) vom IT-Server (SERV) aus, wobei der Status des Fahrzeugs von "Zur Reservierung verfügbar" auf "Zur Reservierung nicht verfügbar" wechselt,
-- Übertragung eines Befehls vom IT-Server (SERV) zur Aktivierung der Ver-/Entriegelungsvorrichtung des reservierten ausgewählten Fahrzeugs (CAR, VEL),
und wobei ein Befehl zur Deaktivierung der Ver-/Entriegelungsvorrichtung des ausgewählten reservierten Fahrzeugs (CAR, VEL) vom IT-Server (SERV) an die Ausstattung (CEQ, VEQ) des Fahrzeugs übertragen wird, wenn der Server durch Geo-Lokalisierung feststellt, dass die Position der Ausstattung (EQ) des Verwenders mit der des Fahrzeugs übereinstimmt.

2. Verfahren nach Anspruch 1, das die folgenden Schritte einschließt:
- Auswahl, von der IT-Ausstattung (EQ) des Verwenders (U) aus, eines oder mehrerer Kriterien für die Bevorzugung von Fahrzeugen, die auf der Reise verwendet werden sollen, und deren Verwendungsbedingungen,
- Übertragung dieses Kriteriums oder dieser Kriterien an den IT-Server (SERV),
- Ausarbeitung der Reise durch den IT-Server (SERV) unter Berücksichtigung der durch das oder die Bevorzugungskriterien bestimmten Einschränkungen.

3. Verfahren nach Anspruch 2, einschließend den folgenden Schritt: Abrufen von Daten durch den IT-Server (SERV), mit denen überprüft werden kann, ob das ausgewählte Fahrzeug (CAR, VEL) alle oder einen Teil der Bevorzugungskriterien erfüllt, wobei die Daten vom Server abgerufen werden,
- aus einer oder mehreren Datenbanken, die über ein IT-Netz zugänglich sind, und/oder
- durch Abfrage von Sensoren, die an den Fahrzeugen der Flotte installiert sind.

4. Verfahren nach einem der vorhergehenden Ansprüche, das die folgenden Schritte umfasst:
- Verwendung einer ersten Flotte von gemeinsam genutzten Fahrzeugen und einer zweiten Flotte von gemeinsam genutzten Fahrzeugen, wobei sich der Typ der Fahrzeuge der ersten Flotte vom Typ der Fahrzeuge der zweiten Flotte unterscheidet,
- Zuweisung von Status durch den IT-Server (SERV) an die Fahrzeuge der ersten Flotte und an die Fahrzeuge der zweiten Flotte, wobei die Status mindestens "Zur Reservierung verfügbar" und "Zur Reservierung nicht verfügbar" sind,
- Bestimmung, durch den IT-Server (SERV), der geografischen Positionen der Fahrzeuge der ersten Flotte und der Fahrzeuge der zweiten Flotte,
- Auswahl, durch den IT-Server (SERV), eines ersten Fahrzeugs (CAR) der ersten Flotte und eines zweiten Fahrzeugs (VEL) der zweiten Flotte, wobei die ausgewählten Fahrzeuge zwischen dem Startpunkt (A) und dem Zielpunkt (B) lokalisiert sind und einen Status "Zur Reservierung verfügbar" haben,
- Ausarbeitung, durch den IT-Server (SERV), einer schnellsten und/oder kürzesten Reise zwischen dem Startpunkt (A) und dem Zielpunkt (B), wobei die Reise so ausgearbeitet wird, dass der erste Reiseabschnitt (A-X1) das erste ausgewählte Fahrzeug (CAR) verwendet und der zweite Reiseabschnitt (Y2-B) das zweite ausgewählte Fahrzeug (VEL) verwendet,
- Übertragung dieser Reise vom IT-Server (SERV) aus an die IT-Ausstattung (EQ) des Verwenders (U) zur Bestätigung,
- im Falle der Bestätigung der Reise durch den Verwender (U), Reservierung des ersten ausgewählten Fahrzeugs (CAR) und des zweiten ausgewählten Fahrzeugs (VEL) vom IT-Server (SERV) aus.

5. Verfahren nach einem der vorhergehenden Ansprüche, wobei:
- der erste Reiseabschnitt (X1-Y1) und der zweite Reiseabschnitt (Y2-B) zwei aufeinanderfolgende Abschnitte sind,
- die Verbindung zwischen den beiden Reiseabschnitten durch einen Eintrittspunkt (Y1) definiert ist, an dem der Verwender (U) ein erstes Fahrzeug (MET) freigibt, das auf dem ersten Reiseabschnitt (X1-Y1) verwendet wird, und durch einen Austrittspunkt (Y2), an dem der Verwender (U) ein zweites Fahrzeug (VEL) abruft, das auf dem zweiten Reiseabschnitt (Y2-B) verwendet wird,
- der IT-Server (SERV) die Reise so ausarbeitet, dass die Entfernung zwischen dem Eintrittspunkt (Y1) und dem Austrittspunkt (Y2) kleiner als ein vorbestimmter Wert ist.

6. Verfahren nach einem der vorhergehenden Ansprüche, das den folgenden Schritt umfasst: Verwendung eines öffentlichen Transportfahrzeugs (MET) auf mindestens einem Reiseabschnitt (X1-Y1).

7. Verfahren nach einem der vorhergehenden Ansprüche, das die folgenden Schritte umfasst:
- Erfassung der Fahrzeuge, die zu mindestens zwei Flotten von gemeinsam genutzten Fahrzeugen gehören, in einer Datenbank (BAS), wobei sich der Typ der Fahrzeuge der ersten Flotte vom Typ der Fahrzeuge der zweiten Flotte unterscheidet, wobei die Typen aus der folgenden Familie ausgewählt werden: selbstfahrendes Auto, Auto, motorisiertes Zweirad, Fahrrad, Scooter, Skateboard, elektrisches Einrad, Segway,
- Auswahl eines ersten Fahrzeugs (CAR) der ersten Flotte und eines zweiten Fahrzeugs (VEL) der zweiten Flotte aus der Datenbank (BAS) durch den IT-Server (SERV),
- Ausarbeitung, durch den IT-Server (SERV), einer schnellsten und/oder kürzesten Reise zwischen dem Startpunkt (A) und dem Zielpunkt (B), wobei die Reise so ausgearbeitet wird, dass der erste Reiseabschnitt (A-X1) das erste ausgewählte Fahrzeug (CAR) verwendet, und der zweite Reiseabschnitt (Y2-B) das zweite ausgewählte Fahrzeug (VEL) verwendet.

8. Verfahren nach Anspruch 7, das die folgenden Schritte einschließt:
- Abrufen, durch den IT-Server (SERV), von Daten über den Straßenverkehr in einem geografischen Gebiet, das den Startpunkt (A) und den Zielpunkt (B) beinhaltet,
- Auswahl des Fahrzeugtyps durch den IT-Server (SERV) in Abhängigkeit von den abgerufenen Daten.

9. Verfahren nach einem der vorhergehenden Ansprüche, das nach der Reservierung des ausgewählten Fahrzeugs (CAR, VEL) den folgenden Schritt umfasst:
- Übertragung des Standorts des Fahrzeugs und eines Mittels zur Identifizierung des Fahrzeugs vom IT-Server (SERV) aus an die IT-Ausstattung (EQ) des Verwenders (U).

10. System zur Reiseplanung, umfassend:
- eine IT-Ausstattung (EQ) eines Verwenders (U), die dazu geeignet ist, einen Startpunkt (A) der Reise und einen Zielpunkt (B) der Reise zu bestimmen,
- einen IT-Server (SERV), der dazu geeignet ist, mindestens zwei Transportfahrzeuge (CAR, VEL, MET) zwischen dem Startpunkt (A) und dem Zielpunkt (B) auszuwählen, so dass die Reise mindestens einen ersten Reiseabschnitt (A-X1) unter Verwendung eines Fahrzeugs (CAR) und einen zweiten Reiseabschnitt (Y2-B) unter Verwendung eines anderen Fahrzeugs (VEL) umfasst,
- ein Fahrzeug (CAR, VEL) einer Flotte von gemeinsam genutzten Fahrzeugen, das auf mindestens einem Reiseabschnitt (A-X1; Y2-B) verwendet wird, wobei die Fahrzeuge der Flotte mit einer Ver-/Entriegelungsvorrichtung ausgestattet sind, die, wenn sie durch eine Ausstattung (CEQ, VEQ) der Fahrzeuge aktiviert werden, die Fahrzeuge physisch unverwendbar machen,
- den IT-Server (SERV), der eine Verarbeitungseinheit und einen Speicher, der eine oder mehrere IT-Anwendungen einschließt, umfasst, deren Anweisungen, wenn sie von der Verarbeitungseinheit ausgeführt werden, dem Server ermöglichen:
-- den Fahrzeugen der Flotte Status zuzuweisen, wobei die Status mindestens sind: "Zur Reservierung verfügbar" und "Zur Reservierung nicht verfügbar",
-- geografische Positionen der Fahrzeuge der Flotte zu bestimmen,
-- in Reaktion auf die Kenntnis des Startpunkts (A) und des Zielpunkts (B) der Reise: mindestens ein Fahrzeug (CAR, VEL) der Flotte auszuwählen, das zwischen dem Startpunkt (A) und dem Zielpunkt (B) lokalisiert ist und das einen Status "Zur Reservierung verfügbar" hat,
-- eine schnellste und/oder kürzeste Reise zwischen dem Startpunkt (A) und dem Zielpunkt (B) auszuarbeiten, wobei die Reise so ausgearbeitet wird, dass mindestens einer der Reiseabschnitte (A-X1; Y2-B) das ausgewählte Fahrzeug (CAR, VEL) verwendet,
-- diese Reise zur Bestätigung an die IT-Ausstattung (Q) des Verwenders (U) zu übertragen,
-- bei Bestätigung der Reise durch den Verwender (U):
--- das ausgewählte Fahrzeugs (CAR, VEL) zu reservieren, wobei der Status des Fahrzeugs von "Zur Reservierung verfügbar" auf "Zur Reservierung nicht verfügbar" wechselt,
--- einen Befehl zur Aktivierung der Ver-/Entriegelungsvorrichtung des ausgewählten reservierten Fahrzeugs (CAR, VEL) zu übertragen,
und wobei ein Befehl zur Deaktivierung der Ver-/Entriegelungsvorrichtung des ausgewählten reservierten Fahrzeugs (CAR, VEL) vom IT-Server (SERV) an die Ausstattung (CEQ, VEQ) des Fahrzeugs übertragen wird, wenn der Server durch Geo-Lokalisierung feststellt, dass die Position der Ausstattung (EQ) des Verwenders mit der des Fahrzeugs übereinstimmt.

## Claims

1. Method for planning a journey, comprising the following steps:
- determining, from a piece of computer equipment (EQ) of a user (U), a start point (A) of the journey and an end point (B) of said journey,
- selecting at least two vehicles (CAR, VEL, MET) as means of transport between the start point (A) and the end point (B), such that the journey comprises at least a first journey segment (A-X1) using one vehicle (CAR) and a second journey segment (Y2-B) using another vehicle (VEL),
the method comprising the following steps:
- using a fleet of shared vehicles, said vehicles being equipped with a locking/unlocking device that, when they are activated by a piece of equipment (CEQ, VEQ) of said vehicles, make said vehicles physically unusable,
- assigning, by means of a server (SERV), statuses to the vehicles of the fleet, which statuses are at least: "available for reservation" and "unavailable for reservation",
- determining, by means of the server (SERV), geographic positions of the vehicles of the fleet,
- as soon as the start point (A) and end point (B) of the journey are known to the server (SERV) then: selecting, by means of said server, at least one fleet vehicle (CAR, VEL) that is located between the start point (A) and the end point (B) and that has the status "available for reservation",
- generating, by means of the server (SERV), the fastest and/or shortest journey between the start point (A) and the end point (B), said journey being generated such that at least one of the journey segments (A-Xl; Y2-B) uses the selected vehicle (CAR, VEL),
- transmitting this journey, from the server (SERV), to the piece of computer equipment (EQ) of the user (U) for validation,
- in case of validation of the journey of the user (U):
-- reserving, from the server (SERV), the selected vehicle (CAR, VEL), the status of said vehicle passing from "available for reservation" to "unavailable for reservation",
-- transmitting, by means of the server (SERV), a command to activate the locking/unlocking device of the reserved selected vehicle (CAR, VEL),
and wherein a command to deactivate the locking/unlocking device of the reserved selected vehicle (CAR, VEL) is transmitted by the server (SERV) to the piece of equipment (CEQ, VEQ) of said vehicle, when said server detects, via geolocation, that the position of the piece of equipment (EQ) of the user coincides with the position of said vehicle.

2. Method according to Claim 1, comprising the following steps:
- selecting, from the piece of computer equipment (EQ) of the user (U), one or more preference criteria as to the vehicles to be used on the journey and their condition of use,
- transmitting this or these criteria to the server (SERV),
- generating the journey, by means of the server (SERV), taking into account one or more constraints defined by the one or more preference criteria.

3. Method according to Claim 2, comprising the following step: retrieving, by means of the server (SERV), data making it possible to verify whether the selected vehicle (CAR, VEL) meets all or some of the preference criteria, which data are retrieved by said server,
- from one or more databases accessible through a computer network, and/or
- via interrogation of sensors installed in the vehicles of the fleet.

4. Method according to one of the preceding claims, comprising the following steps:
- using a first fleet of shared vehicles and a second fleet of shared vehicles, the type of the vehicles of the first fleet being different from the type of the vehicles of the second fleet,
- assigning, by means of the server (SERV), statuses to the vehicles of the first fleet and to the vehicles of the second fleet, which statuses are at least: "available for reservation" and "unavailable for reservation",
- determining, by means of the server (SERV), geographic positions of the vehicles of the first fleet and of the vehicles of the second fleet,
- selecting, by means of the server (SERV), a first vehicle (CAR) from the first fleet and a second vehicle (VEL) from the second fleet, which selected vehicles are located between the start point (A) and the end point (B) and have the status "available for reservation",
- generating, by means of the server (SERV), the fastest and/or shortest journey between the start point (A) and the end point (B), said journey being generated such that the first journey segment (A-X1) uses the selected first vehicle (CAR) and the second journey segment (Y2-B) uses the selected second vehicle (VEL),
- transmitting this journey, from the server (SERV), to the piece of computer equipment (EQ) of the user (U) for validation,
- in case of validation of the journey of the user (U), reserving, from the server (SERV), the selected first vehicle (CAR) and the selected second vehicle (VEL).

5. Method according to one of the preceding claims, wherein:
- the first journey segment (X1-Y1) and the second journey segment (Y2-B) are two consecutive segments,
- the junction between the two journey segments is defined by an entry point (Y1) where the user (U) relinquishes a first vehicle (MET) used on the first journey segment (X1-Y1) and by an exit point (Y2) where the user (U) takes possession of a second vehicle (VEL) used on the second journey segment (Y2-B),
- the server (SERV) generates the journey so that the distance between the entry point (Y1) and the exit point (Y2) is smaller than a predetermined value.

6. Method according to one of the preceding claims, comprising the following step: using a means of public transport (MET) as vehicle on at least one journey segment (X1-Y1).

7. Method according to one of the preceding claims, comprising the following steps:
- storing, in a database (BAS), vehicles belonging to at least two fleets of shared vehicles, the type of the vehicles of the first fleet being different from the type of the vehicles of the second fleet, said types being chosen from the following family: self-driving car, car, motorized two-wheeler, bicycle, scooter, skateboard, electric unicycle, Segway,
- selecting, from the database (BAS), by means of the server (SERV), a first vehicle (CAR) of the first fleet and a second vehicle (VEL) of the second fleet,
- generating, by means of the server (SERV), the fastest and/or shortest journey between the start point (A) and the end point (B), said journey being generated such that the first journey segment (A-X1) uses the selected first vehicle (CAR) and the second journey segment (Y2-B) uses the selected second vehicle (VEL).

8. Method according to Claim 7, comprising the following steps:
- retrieving, by means of the server (SERV), data relative to road traffic in a geographic region encompassing the start point (A) and the end point (B),
- selecting the type of vehicle, by means of the server (SERV), depending on the retrieved data.

9. Method according to one of the preceding claims, comprising the following step after reservation of the selected vehicle (CAR, VEL):
- transmitting, to the piece of computer equipment (EQ) of the user (U), from the server (SERV), the location of said vehicle and a means of identifying said vehicle.

10. System for planning a journey, comprising:
- a piece of computer equipment (EQ) of a user (U), said piece of computer equipment being suitable for determining a start point (A) of the journey and an end point (B) of said journey,
- a server (SERV) suitable for selecting at least two vehicles (CAR, VEL, MET) as means of transport between the start point (A) and the end point (B), such that the journey comprises at least a first journey segment (A-Xl) using one vehicle (CAR) and a second journey segment (Y2-B) using another vehicle (VEL),
- a vehicle (CAR, VEL) of a fleet of shared vehicles being used on at least one journey segment (A-Xl; Y2-B), the vehicles of said fleet being equipped with a locking/unlocking device that, when they are activated by a piece of equipment (CEQ, VEQ) of said vehicles, make said vehicles physically unusable,
- the server (SERV) comprising a processing unit and a memory comprising one or more computer applications the instructions of which, when they are executed by said processing unit, allow said server:
-- to assign statuses to the vehicles of the fleet, which statuses are at least: "available for reservation" and "unavailable for reservation",
-- to determine geographic positions of the vehicles of the fleet,
-- in response to learning the start point (A) and end point (B) of the journey: to select at least one fleet vehicle (CAR, VEL) that is located between the start point (A) and the end point (B) and that has the status "available for reservation",
-- to generate the fastest and/or shortest journey between the start point (A) and the end point (B), said journey being generated such that at least one of the journey segments (A-Xl; Y2-B) uses the selected vehicle (CAR, VEL),
-- to transmit this journey to the piece of computer equipment (Q) of the user (U) for validation,
-- in case of validation of the journey of the user (U):
--- to reserve the selected vehicle (CAR, VEL), the status of said vehicle passing from "available for reservation" to "unavailable for reservation",
--- to transmit a command to activate the locking/unlocking device of the reserved selected vehicle (CAR, VEL),
and wherein a command to deactivate the locking/unlocking device of the reserved selected vehicle (CAR, VEL) is transmitted by the server (SERV) to the piece of equipment (CEQ, VEQ) of said vehicle, when said server detects, via geolocation, that the position of the piece of equipment (EQ) of the user coincides with the position of said vehicle.
